# EUROPEAN PATENT APPLICATION

(11) **EP 4 738 442 A1**
(43) Date of publication of application: **06.05.2026**
(21) Application number: 25209172.3
(22) Date of filing: 16.10.2025
(51) Int. Cl.: H01M 4/04, H01M 4/139, H01M 10/04, H01M 10/058

(54) **PRE-CALENDERING SYSTEM FOR REDUCING STRAIN IMBALANCES IN MULTILANE ELECTRODES**

(30) Priority: 01.11.2024 US 202418935281
(71) Applicant: Tesla, Inc., Austin, TX 78725 (US)
(72) Inventor: MUTHUKUMAR, Siva Ram Kumar, Austin, 78725 (US); YANG, Xiaoyun, Austin, 78725 (US); ZHU, Yaoyao, Austin, 78725 (US); LV, Kezhou, Austin, 78725 (US)
(74) Representative: Zacco Sweden AB

(57) **Abstract**

Generally described, one or more aspects of the present disclosure relate to methods, systems, and devices related to pre-straining bare lanes of a multilane electrode with a system for calendering a multilane electrode including a pre-strain roll device including a plurality of pre-strain rollers and a pressure roller forming a pre-strain nib and a calender roll device comprising a pair of calendering rollers forming a calendering nip positioned downstream from the pre-strain roll device.

## Description

### INCORPORATION BY REFERENCE TO ANY PRIORITY APPLICATIONS

This application claims the benefit of priority to U.S. Patent Application No. 18/935,281, entitled "PRE-CALENDERING SYSTEM FOR REDUCING STRAIN IMBALANCES IN MULTILANE ELECTRODES," filed on November 1, 2024.

### BACKGROUND

### Field

The present disclosure relates to devices, systems, and methods for calendering an electrode. More specifically, the present disclosure relates to pre-straining a multilane electrode prior to calendering the multilane electrode.

### Description of the Related Art

Electrodes can be created using a wet or dry electrode manufacturing process. Conventional wet electrode processes involve mixing a slurry, coating a foil with the slurry, drying the slurry onto the foil, and then calendering the electrode. Electrodes can also be created using a dry electrode process by calendering a dry electrode film onto a foil.

The calendering process can be prone to quality issues, such as introducing electrode camber and creasing. Accordingly, there is a need for devices, systems, and methods for reducing quality issues during the production of electrodes.

### SUMMARY

For purposes of summarizing the embodiments and the advantages achieved over the prior art, certain objects and advantages of the embodiments are described herein. Not all such objects or advantages may be achieved in any particular embodiment of the invention. Thus, for example, those skilled in the art will recognize that the design may be embodied or carried out in a manner that achieves or optimizes one advantage or group of advantages as taught herein without necessarily achieving other objects or advantages as may be taught or suggested herein.

In some aspects, a system for calendering a multilane electrode is described. The system comprising a pre-strain roll device comprising a plurality of pre-strain rollers and a pressure roller, wherein the plurality of pre-strain rollers and the pressure roller form a pre-strain nib; and a calender roll device comprising a pair of calendering rollers forming a calendering nip positioned downstream from the pre-strain roll device; a multilane electrode comprising a plurality of electrode films and a plurality of bare lanes positioned within the pre-strain nib and the calendering nib; wherein each of the plurality of pre-strain rollers is positioned adjacent to a portion of one of the plurality of bare lanes; and wherein the plurality of pre-strain rollers are configured to apply a force to the plurality of bare lanes.

In some aspects, a system for calendering a multilane electrode is described. The system comprises a pre-strain roll device comprising a plurality of pre-strain rollers and a pressure roller, wherein the plurality of pre-strain rollers and the pressure roller form a pre-strain nib; and a calender roll device comprising a pair of calendering rollers forming a calendering nip positioned downstream from the pre-strain roll device.

In some embodiments, the system further comprises a multilane electrode comprising a plurality of electrode films and a plurality of bare lanes positioned within the pre-strain nib and the calendering nib. In some embodiments, the system further comprises a driving pressure roller contacting the pressure roller. In some embodiments, the plurality of pre-strain rollers are configured to be driven by the pressure roller. In some embodiments, the pressure roller is configured to press against the plurality of pre-strain rollers with a pressure of at least about 0.11 T/mm. In some embodiments, the calender roll device is configured to provide a pressure of at least about 0.25 T/mm. In some embodiments, each of the pre-strain rollers comprises a cylindrical surface positioned tangential to a cylindrical surface of the pressure roller. In some embodiments, each of the pre-strain rollers comprises a chamfer at each end of the cylindrical surface. In some embodiments, the pre-strain rollers are heated. In some embodiments, the plurality of pre-strain rollers comprise a stainless steel alloy material. In some embodiments, the pre-strain rollers comprise a surface coating.

In some aspects, a method of manufacturing a multilane electrode for an energy storage device is described. The method comprises pre-strain calendering a multilane electrode comprising a plurality of bare lanes and a plurality of electrode films, wherein pre-strain calendering the multilane electrode comprises straining the plurality of bare lanes to form a pre-strained multilane electrode; and calendering the pre-strained multilane electrode to form a strain-balanced multilane electrode.

In some embodiments, the multilane electrode further comprises a plurality of ceramic coated portions each positioned between each of the plurality of electrode films and each of the plurality of bare lanes. In some embodiments, calendering the pre-strained multilane electrode occurs from a first end to a second end of the pre-strained multilane electrode. In some embodiments, the calendered multilane electrode comprises a camber of at most about 0.4 cm/m. In some embodiments, the method further comprises forming the multilane electrode. In some embodiments, the multilane electrode is formed via a wet process. In some embodiments, the multilane electrode is formed via a dry process.

In some aspects, a method of forming a plurality of electrodes is described. The method comprises performing one of the methods of manufacturing a multilane electrode for an energy storage device described above; and cutting along a length of each bare lanes to form a plurality of electrodes.

In some aspects, a method of forming an electrode assembly is described. The method comprising performing the method of forming a plurality of electrodes as described above; and disposing a separator between one of the plurality of electrodes and another electrode to form an electrode assembly. In some embodiments, one of the plurality of electrodes is a cathode.

### BRIEF DESCRIPTION OF THE DRAWINGS

The present embodiments are described with reference to the accompanying drawings, in which like reference characters reference like elements, and wherein:
FIG. 1 is a schematic diagram illustrating a calender roll system, according to some embodiments.
FIG. 2 is a flow chart of a method of manufacturing a multilane electrode for an energy storage device, according to some embodiments.
FIG. 3 is a schematic illustration of a cross section of a multilane electrode, according to some embodiments.
FIG. 4 is a schematic illustration of a calender roll system, according to some embodiments.
FIG. 5 is a schematic illustration of a pre-calender roll, according to some embodiments.
FIG. 6 is a schematic illustration of a top view of a pre-calender roll and a multilane electrode, according to some embodiments.
FIG. 7 is a schematic illustration of a cross section of a pre-strained multilane electrode, according to some embodiments.
FIG. 8 is a schematic illustration of a calender roll system, according to some embodiments.
FIG. 9 is a schematic illustration of a cross section of a calendered multilane electrode, according to some embodiments.
FIG. 10 is a bar chart showing camber in multilane electrodes, according to some embodiments.
FIG. 11 is a bar chart showing creasing in multilane electrodes, according to some embodiments.

### DETAILED DESCRIPTION

The following detailed description of certain embodiments presents various descriptions of specific embodiments. However, the innovations described herein can be embodied in a multitude of different ways, for example, as defined and covered by the claims. In this description, reference is made to the drawings where like reference numerals and/or terms can indicate identical or functionally similar elements. It will be understood that elements illustrated in the figures are not necessarily drawn to scale. Moreover, it will be understood that certain embodiments can include more elements than illustrated in a drawing and/or a subset of the elements illustrated in a drawing. Further, some embodiments can incorporate any suitable combination of features from two or more drawings. The headings are provided for convenience only and do not impact the scope or meaning of the claims.

Generally described, one or more aspects of the present disclosure relate to systems, methods, and devices for reducing strain imbalances in multilane electrodes, thereby reducing camber and creasing in the bare portions of the multilane electrode. The system can be integrated into a calender rolling system and can create multilane electrodes with reduced camber and creasing. Advantageously, reducing camber and creasing in a multilane electrode improves the shape and strength of the multilane electrode.

Multilane electrodes include a foil layer (i.e., a current collector) coated with an electrode film material to form a plurality of coated lanes (i.e., portions of the foil layer covered by the electrode film material and/or ceramic material) and a plurality of bare lanes (i.e., exposed portions of the foil layer). In some embodiments, the multilane electrode may be a double-sided multilane electrode that includes coated lanes on both sides of the foil layer (e.g., the top and bottom). In the process of forming a multilane electrode, the multilane electrode passes through a series of calender rolls (i.e., a calender system) which compress the multilane electrode. Because the coated lanes include an electrode film material, the coated lanes are thicker than the bare lanes. Therefore, when passing through the calender system, the calender rolls contact the coated lanes and the bare lanes unevenly, where the coated lanes contact the calender rolls more substantially. Because the coated lanes more substantially contact the calender rolls, the coated lanes see larger loads from the calender rolls relative to the bare lanes. This can result in different stress and strain levels between the bare lanes and the coated lanes. The strain imbalance can cause creasing and camber in the bare lanes which can result in weaking of the bare lanes and deformation of the shape of the bare lanes.

Pre-straining the bare lanes of a multilane electrode can create a strain in the bare lanes before the multilane electrode passes through a series of calender rolls. Then, when the multilane electrode subsequently passes through the series of calender rolls, the strain imbalance between the pre-strained bare lanes and the coated lanes is reduced or eliminated, forming a strain-balanced electrode. Because the strain imbalance is reduced or eliminated, creasing and camber in the bare lanes can be reduced in the strain-balanced electrode when compared to a multilane electrode calendered without a pre-calender step.

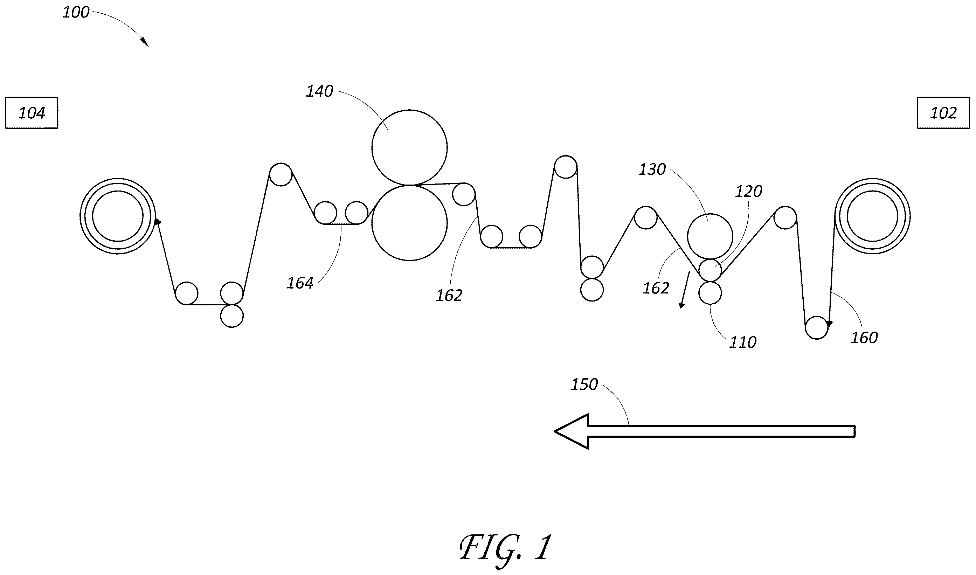

FIG. 1 is a diagram illustrating a calender roll system 100. The calender roll system 100 includes a first end 102 and a second end 104. The calender roll system 100 is arranged so that a multilane electrode can move in a downstream direction 150 from the first end 102 to the second end 104. The calender roll system 100 includes a pre-calender roller 110 and a pressure roller 120 positioned tangential to the pre-calender roller 110. A driving pressure roller 130 is positioned tangential to the pressure roller 120. The calender roll system 100 further includes a pair of calender rollers 140. An uncalendered multilane electrode 160 passes between the pre-calender roller 110 and the pressure roller 120. The uncalendared multilane electrode 160 includes bare foil lanes spaced between coated areas. The pre-calender roller 110 and the pressure roller 120 apply a force to the bare foil lanes creating a strain in the bare foil lanes to form a pre-strained multilane electrode 162. The pre-strained multilane electrode 162 then passes between the pair of calender rollers 140. The pair of calender rollers 140 apply a force to the coated lanes forming a calendered multilane electrode 164. Advantageously, pre-straining the multilane electrode 160 compensates for a strain imbalance between the bare lanes and the coated lanes caused by calendering the multilane electrode without a pre-staining step. A strain imbalance between the bare lanes and the coated lanes can cause creasing and camber in the bare lanes.

In some embodiments, the calender roll system can include a pair of pre-calender rollers and the uncalendared multilane electrode can pass between the pair of calender rollers. In some embodiments, any and/or all of the pre-calender roller, pressure roller, driving pressure roller, or pair of calender rollers can be heated. In some embodiments, the calender roll system can include one or more pre-calender roller - pressure roller pairs positioned in series so that the multilane electrode passes through each consecutively. In some embodiments, the calender roll system can include a plurality of calender roller pairs positioned in series so that the multilane electrode passes through each consecutively. In some embodiments, the pre-calender rollers are made of a stainless steel alloy. For example, a stainless steel alloy with chromium, molybdenum, or tungsten carbide. In some embodiments, the pressure roller is made of the same material as the pre-calender rollers. In some embodiments, the pair of calender rollers are made of a stainless steel alloy. For example, a stainless steel alloy with chromium, molybdenum, or tungsten carbide.

In some embodiments, the pre-strain roller and pressure roller and/or the pair of pre-strain rollers provide a pressure to the multilane electrode of, of about, of at least, or of at least about 0.04 T/mm, 0.05 T/mm, 0.06 T/mm, 0.07 T/mm, 0.08 T/mm, 0.09 T/mm, 0.10 T/mm, 0.11 T/mm, 0.12 T/mm, 0.13 T/mm, 0.15 T/mm, 0.16 T/mm, 0.17 T/mm, 0.18 T/mm, 0.19 T/mm, 0.20 T/mm, 0.21 T/mm, 0.22 T/mm, 0.23 T/mm, 0.24 T/mm, 0.25 T/mm, 0.26 T/mm, 0.27 T/mm, 0.28 T/mm, 0.29 T/mm, or 0.30 T/mm, or any range of values therebetween. In some embodiments, the pair of calender rollers provide a pressure to the multilane electrode of, of about, of at least, or of at least about 0.04 T/mm, 0.05 T/mm, 0.06 T/mm, 0.07 T/mm, 0.08 T/mm, 0.09 T/mm, 0.10 T/mm, 0.11 T/mm, 0.12 T/mm, 0.13 T/mm, 0.15 T/mm, 0.16 T/mm, 0.17 T/mm, 0.18 T/mm, 0.19 T/mm, 0.20 T/mm, 0.21 T/mm, 0.22 T/mm, 0.23 T/mm, 0.24 T/mm, 0.25 T/mm, 0.26 T/mm, 0.27 T/mm, 0.28 T/mm, 0.29 T/mm, or 0.30 T/mm, or any range of values therebetween.

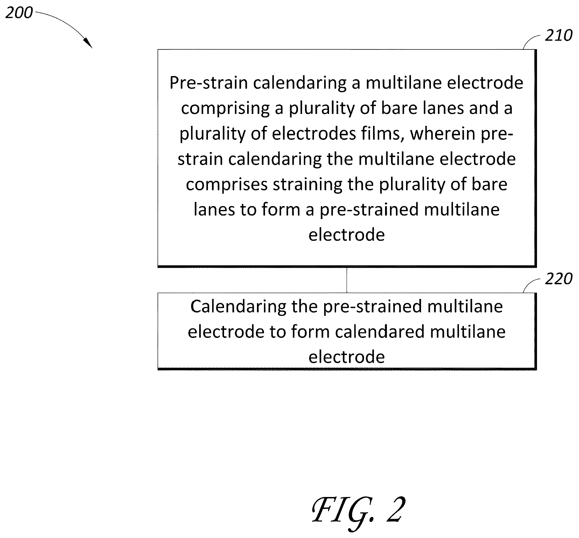

FIG. 2 illustrates a method 200 for manufacturing a multilane electrode for an energy storage device that can reduce and/or eliminate creasing and camber in a calendered multilane electrode. At step 210, the method includes pre-strain calendering a multilane electrode including a plurality of bare lanes and a plurality of electrode films, where pre-strain calendering the multilane electrode includes straining the plurality of bare lanes to form a prestrained multilane electrode. At step 220, the method includes calendering the pre-strained multilane electrode to form a calendered multilane electrode.

In some embodiments, the multilane electrode includes a plurality of ceramic coated portions, where each ceramic portion is positioned between an electrode film and a bare lane. In some embodiments, calendering the pre-strained multilane electrode occurs from a first end to a second end of the pre-strained multilane electrode so that the entirety of the length of the multilane electrode is pre-strained. In some embodiments, all or substantially all of the plurality of bare lanes are pre-strained. In some embodiments, the method includes forming the multilane electrode. In some embodiments, the multilane electrode is formed via a wet fabrication process. In some embodiments, the multilane electrode is formed via a dry fabrication process. In some embodiments, a method of forming a plurality of electrodes includes forming a multilane electrode, pre-strain calendering a multilane electrode including a plurality of bare lanes and a plurality of electrode films, where pre-strain calendering the multilane electrode includes straining the plurality of bare lanes to form a pre-strained multilane electrode, calendering the pre-strained multilane electrode to form a calendered multilane electrode, and cutting along a length of each bare lane to form a plurality of electrodes. In some embodiments, a separator is disposed between one of the plurality of electrodes and another electrode to form an electrode assembly. In some embodiments, one of the plurality of electrodes is a cathode. In some embodiments, one of the plurality of electrodes is an anode.

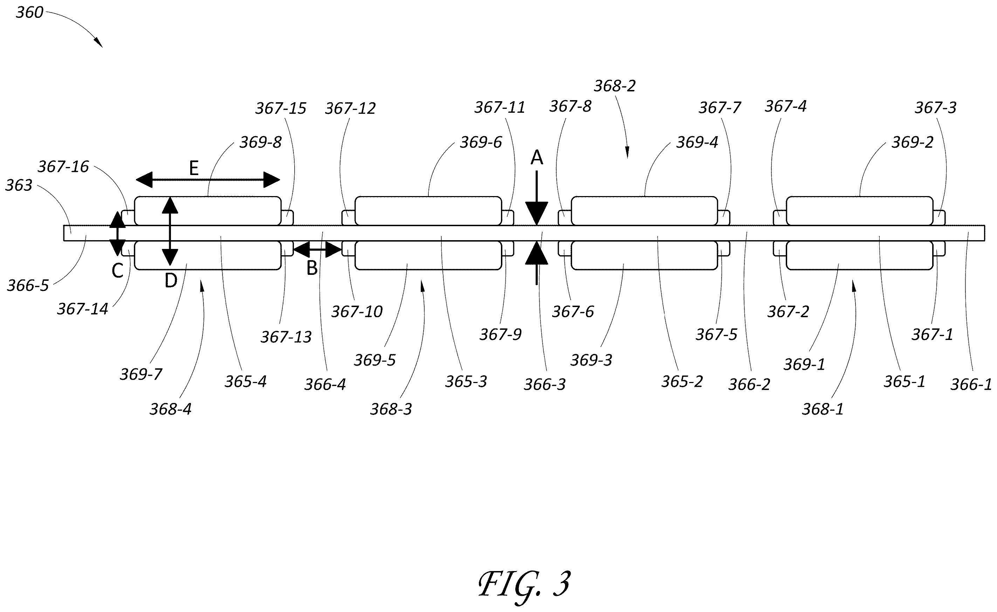

FIG. 3 illustrates a cross-section of a multilane electrode 360. The multilane electrode 360 includes a foil layer 363 (i.e., a current collector). The foil layer 363 includes a plurality of bare lanes 366-1 - 366-5 and a plurality of coated lanes 368-1 - 368-4 (i.e., electrode films). As illustrated, the multilane electrode 360 begins with a bare lane 366-1. A coated lane 368-1 is positioned next to the bare lane 366-1.

The coated lane 368-1 includes a first electrode film coated portion 369-1 positioned on a first side (e.g., the bottom) of a coated foil portion 365-1. The coated lane 368-1 also includes a first ceramic coated portion 367-1 which is positioned adjacent to a first edge of the first electrode film coated portion 369-1 and a second ceramic coated portion 367-2 which is positioned adjacent to a second edge of the first electrode film coated portion 369-1. The first ceramic coated portion 367-1 is narrower than the first electrode film coated portion 369-1 and the second ceramic coated portion 367-2 is narrower than the first electrode film coated portion 369-1. The first ceramic coated portion 367-1 has the same width as the second ceramic coated portion 367-2. The coated lane 368-1 also includes a second electrode film coated portion 369-2 positioned on a second side (e.g., the top) of coated foil portion 365-1. The coated lane 368-1 also includes a third ceramic coated portion 367-3 which is positioned adjacent to a first edge of the second electrode film coated portion 369-2 and a fourth ceramic coated portion 367-4 which is positioned adjacent to a second edge of the first electrode film coated portion 369-1. The third ceramic coated portion 367-3 is narrower than the second electrode film coated portion 369-2 and the fourth ceramic coated portion 367-4 is narrower than the third electrode film coated portion 369-3. The third ceramic coated portion 367-3 has the same width as the fourth ceramic coated portion 367-4. The first electrode film coated portion 369-1 can have the same width as the second electrode film coated portion 369-2 and the first electrode film coated portion 369-1 can align with the second electrode film coated portion 369-2.

A second bare lane 366-2 is positioned on the other side of the coated lane 368-1. A second coated lane 368-2 is positioned on the other side of the second bare lane 366-2. A third bare lane 366-3 is positioned on the other side of the second coated lane 368-2. A third coated lane 368-3 is positioned on the other side of the third bare lane 366-3. A fourth bare lane 366-4 is positioned on the other side of the third bare lane 366-3. A fourth coated lane 368-4 is positioned on the other side of the fourth bare lane 366-4 and a fifth bare lane 366-5 is positioned on the other side of the fourth coated lane. Each coated lane 368-1, 368-2, 368-3, and 368-4 has the same organization of ceramic coated portions and electrode film coated portions as those described above regarding the coated lane 368-1.

Coated lane 368-2 includes a coated foil portion 365-2, a first electrode film coated portion 369-3, a second electrode film coated portion 369-4, a first ceramic coated portion 367-5, a second ceramic coated portion 367-6, a third ceramic coated portion 367-7, and a fourth ceramic coated portion 367-8, which are arranged in the same pattern as described above with respect to coated lane 368-1.

Coated lane 368-3 includes a coated foil portion 365-3, a first electrode film coated portion 369-5, a second electrode film coated portion 369-6, a first ceramic coated portion 367-9, a second ceramic coated portion 367-10, a third ceramic coated portion 367-11, and a fourth ceramic coated portion 367-12, which are arranged in the same pattern as described above with respect to coated lane 368-1.

Coated lane 368-4 includes a coated foil portion 365-4, a first electrode film coated portion 369-7, a second electrode film coated portion 369-8, a first ceramic coated portion 367-13, a second ceramic coated portion 367-14, a third ceramic coated portion 367-15, and a fourth ceramic coated portion 367-16, which are arranged in the same pattern as described above with respect to coated lane 368-1.

In some embodiments, the pattern of alternating bare lanes and coated lanes can continue indefinitely for any number of repetitions so that the multilane electrode can include about, at least, or at least about 1, 2, 3, 4, 5, 6, 7, 8, 9, 10, 11, 12, 13, 14, 15, 16, 17, 18. 19, 20, 25, 30, 35, 40, 45, 50, 55, 60, 65, 70, 75, 80, 85, 90, 95, or 100 coated lanes, or any range of values therebetween.

The foil layer 363 has a thickness A. In some examples, the thickness A, is, is about, is at least, or is at least about 9 µm, 10 µm, 11 µm, 12 µm, 13 µm, 14 µm, or 15 µm, 20 µm, 30, 40 µm, 50 µm, 100 µm, 200 µm, or any range of values therebetween. The bare lanes may each independently have a width B of adjacent coated foil portions, where FIG. 3 shows width B as a distance between second and first ceramic coated portions 367-10 to 367-13. In some examples, width B is, is about, is at least, or is at least about 5 mm, 6 mm, 7 mm, 8 mm, 9 mm, 10 mm, 11 mm, 12 mm, 13 mm, 14 mm, 15 mm, 16 mm, or any range of values therebetween. Thickness C includes the thickness of the overlying ceramic coated portions and foil layer of a coated foil portion, where FIG. 3 shows thickness C as the distance between second and fourth ceramic coated portions 367-14 and 367-16. In some examples, the thickness C is, is about, is at least, or is at least about 20, 25, 30, 35, 40, 45 µm, 50 µm, 55 µm, 60 µm, 65 µm, 70 µm, 75 µm, 80 µm, 85 µm, 90 µm, 95, 100 µm, 200 µm, 300 µm or any range of values therebetween. Thickness D includes the thickness of overlying electrode film coated portions and foil layer of a coated foil portion, where FIG. 3 shows thickness D as the distance between electrode film coated portions 369-7 and 369-8). In some examples, the thickness D is, is about, is at least, or is at least about 50, 55, 60, 65, 70, 75, 80, 85, 90, 95, 100, 105, 110, 115, 120, 125, 130, 135 µm, 140 µm, 145 µm, 150 µm, 155 µm, 160 µm, or 165 µm, 170 µm, 175 µm, 180 µm, 185 µm, 190 µm, 195 µm, 200 µm, 300 µm, 400 µm, 500 µm or any range of values therebetween. The electrode film coated portions may each independently have a width E, where FIG. 3 shows width E as a distance between the ends of second electrode film coated portion 369-8. In some examples, the width E is, is about, is at least, or is at least about 50 mm, 55 mm, 60 mm, 65 mm, 70 mm, 75 mm, 80 mm, 85 mm, 90 mm, 95 mm, 100 mm, 110 mm, 120 mm, 130 mm, 140 mm, 150 mm, 160 mm, 170 mm, 180 mm, 190 mm, 200 mm, 300 mm, 400 mm or any range of values therebetween.

In some embodiments, the electrode film portions are adjacent to the bare lanes. In some embodiments, the multilane electrode does not include ceramic coated portions. In some embodiments, each of the two electrode film coated layers can have any suitable shape, size and thickness. In some embodiments, an electrode is a single-sided electrode. In some embodiments, the single-sided electrode includes one electrode material coated portion. In some embodiments, the multilane electrode is formed via a dry electrode fabrication process. In some embodiments, the multilane electrode is formed via a wet electrode fabrication process.

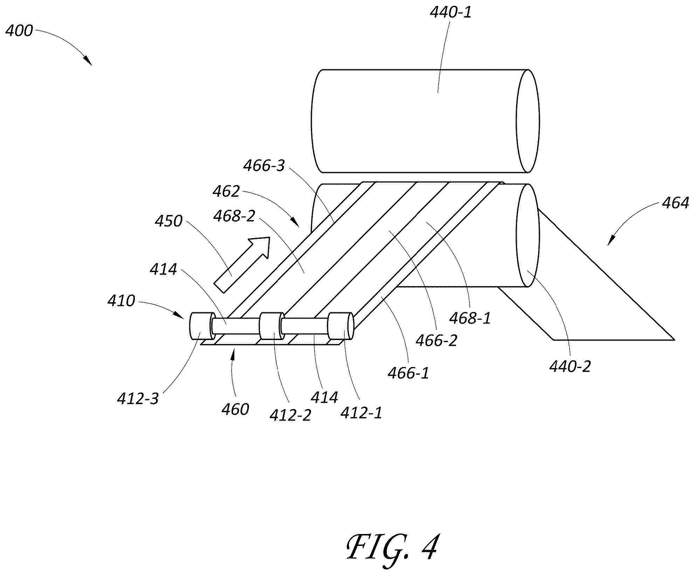

FIG. 4 illustrates a perspective view illustration of a calender roll system 400. The calender roll system 400 includes a pre-calender roller 410 and a pair of calender rollers 440-1 and 440-2. A multilane electrode 460 passes through the calender roll system 400 in a downstream direction 450. The multilane electrode 460 is pre-calendered by the pre-calender roller 410 to form a pre-strained multilane electrode 462. The pre-strained multilane electrode 462 is then calendered by the calender rollers 440 to form a calendered multilane electrode 464.

The pre-calender roller 410 includes a plurality of pre-strain rollers 412-1, 412-2, and 412-3 which are spaced apart from each other and connected with a center rail 414. The multilane electrode 460 includes a plurality of bare lanes 466-1, 466-2, and 466-3 spaced apart from a plurality of coated lanes 468-1 and 468-2. Each pre-strain roller 412 is positioned over a bare lane 466 of the multilane electrode 460 and the space between the pre-strain rollers 412 is approximately the width of the coated lane 468. The pre-strain rollers 412 apply a force to the bare lanes 466 to create the pre-strained multilane electrode 462. Next, the pre-strained electrode 462 passes through the pair of calender rollers 440-1 and 440-2 which apply a force to the coated lanes 468 and create a calendered multilane electrode 464.

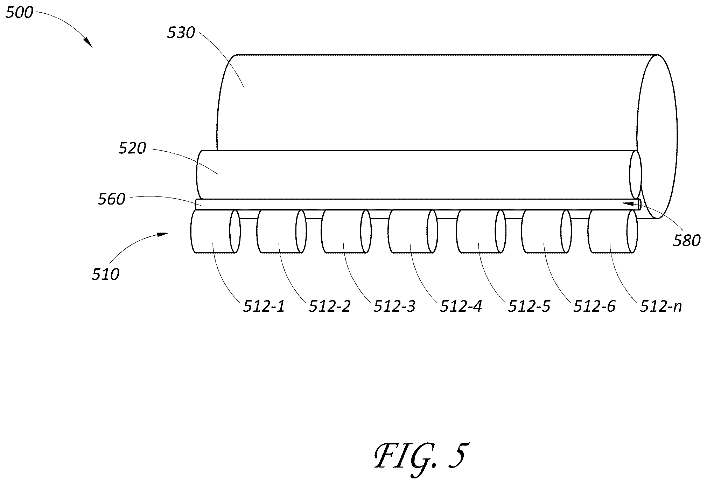

FIG. 5 illustrates a perspective illustration of a pre-calender system 500. The pre-calender system 500 includes a pre-calender roller 510 and a pressure roller 520. The pre-calender roller 510 includes a plurality of pre-strain rollers 512-1 through 512-n positioned tangential to the pressure roller 520. The tangential portion of the pressure roller 520 and the pre-calender roller 510 forms a nib 580. An electrode 560 is positioned between the pre-calender roller 510 and the pressure roller 520. A driving pressure roller 530 is positioned tangential to the pressure roller 520. The driving pressure roller 530 applies pressure to the pressure roller 520 and drives the rotation of the pressure roller 520. The driving pressure roller 530 does not contact the pre-calender roller 510. The rotation of the pressure roller 520 pulls the electrode 560 through the nib 580 and the rotation of the pressure roller 520 causes complementary rotation of the pre-calender roller 510.

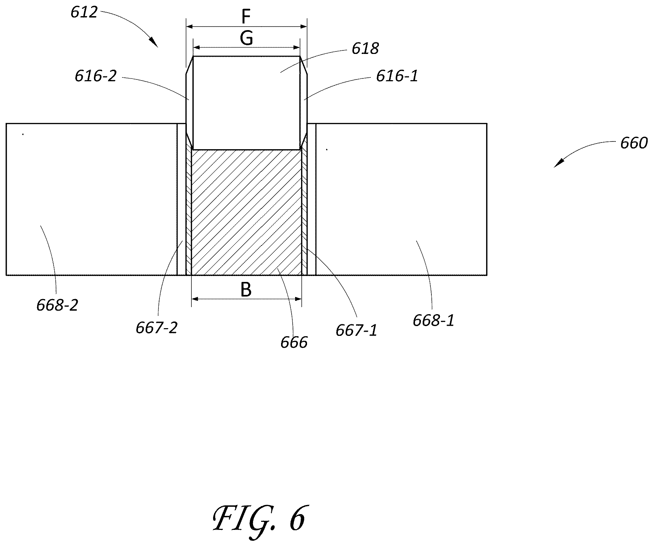

FIG. 6 shows a front view illustration of a pre-strain roller 612 positioned over a bare lane 666 of a multilane electrode 660. A first coated lane 668-1 is positioned on one side of the bare lane 666 and a second coated lane 668-2 is positioned on a second side of the bare lane 666. A first ceramic coated portion 667-1 is positioned between the first coated lane 668-1 and the bare lane 666. A second ceramic coated portion 667-2 is positioned between the second coated lane 668-2 and the bare lane 666.

The pre-strain roller 612 is cylindrical and includes a pre-strain surface 618. A first end of the pre-strain surface 618 includes a chamfer 616-1 and a second end of the pre-strain surface 618 includes a chamfer 616-2.

The bare lane 666 has a width B. The pre-strain surface 618 has a width G and the pre-strain roller 612 has a width F. The width B is slightly larger than the width G. The width F is narrower than the distance between the first coated lane 668-1 and the second coated lane 668-2. The chamfers 616-1 and 616-2 are sized so that they do not contact the ceramic coated portions 667-1 and 667-2 or the coated lanes 668-1 and 668-2. In some examples, width B is, is about, is at least, or is at least about 7 mm, 8 mm, 9 mm, 10 mm, 11 mm, or 12 mm, or any range of values therebetween. In some examples, width G is, is about, is at least, or is at least about 6 mm, 7 mm, 8 mm, 9 mm, 10 mm, 11 mm, or 12 mm, or any range of values therebetween. In some examples, width F is, is about, is at least, or is at least about 7 mm, 8 mm, 9 mm, 10 mm, 11 mm, 12 mm, 13 mm, or 14 mm, or any range of values therebetween.

In some embodiments, the pre-strain roller is heated. In some embodiments, the pre-strain roller is coated with a low friction surface coating. In some embodiments, the pre-strain roller is coated with a surface coating with a lower roughness than the pre-strain roller material. In some embodiments the pre-strain surface is planar. In some embodiments, the pre-strain surface is curved so that the pre-strain surface is convex. In some embodiments, the pre-strain surface is curved so that the pre-strain surface is concave. In some embodiments, the chambers include rounded corners. In some embodiments, the pre-strain roller does not include chamfered ends.

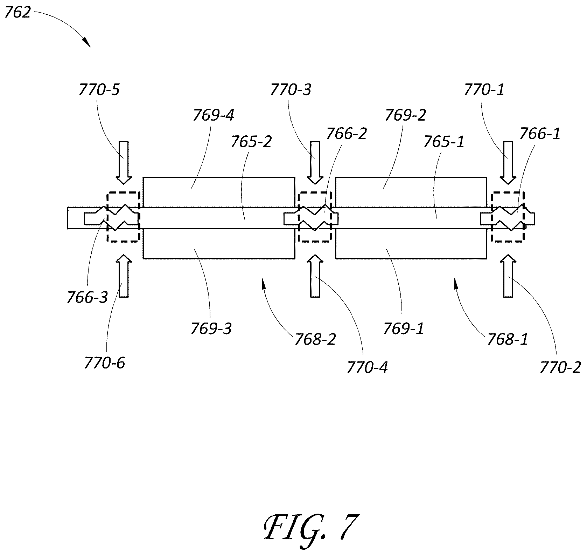

FIG. 7 is a cross-section view of an electrode 762 illustrating the forces applied by a pre-strain roller. As illustrated, the electrode 762 includes a first bare lane 766-1 positioned next to a first coated lane 768-1. The first coated lane 768-1 includes a coated foil portion 765-1 with a first electrode film portion 769-1 positioned on a first side and another second electrode film portion 769-2 positioned on a second side of the coated foil portion 765-1. A second bare lane 766-2 is positioned on the other side of the first coated lane 768-2 and a third bare lane 766-3 is positioned on the other side of the second bare lane 766-2. A first force 770-1 is applied to a first side of the first bare lane 766-1 and a second force 770-2 is applied to a second side of the first bare lane 766-1. The first force 770-1 and the second force 770-2 are applied in opposing directions and create a strain on the first bare lane 766-1. A third force 770-3 is applied to a first side of the second bare lane 766-2 and a fourth force 770-4 is applied to a second side of the second bare lane 766-2. The third force 770-3 and the fourth force 770-4 are applied in opposing directions and create a strain on the second bare lane 766-2. A fifth force 770-5 is applied to a first side of the third bare lane 766-3 and a sixth force 770-6 is applied to a second side of the third bare lane 766-3. The fifth force 770-5 and the sixth force 770-6 are applied in opposing directions and create a strain on the third bare lane 766-3.

The strain on each of the bare lanes can cause ceasing and cambering in the bare lanes. In some embodiments, the bare lanes of the pre-strained multilane electrode have a camber of, of about, of at most, or of at most about, 0.7 cm/m, 0.65 cm/m, 0.5 cm/m, 0.45 cm/m, 0.4 cm/m, 0.35 cm/m, 0.3 cm/m, 0.25 cm/m, 0.15 cm/m, 0.1 cm/m, 0.05 cm/m or any range of values therebetween. In some embodiments, the camber can run across all the bare lanes on the pre-strained multilane electrode. In some embodiments, the camber can run across substantially all the bare lanes on the pre-strained multilane electrode. In some embodiments, the camber can run across one or more of the bare lanes on the pre-strained multilane electrode. In some embodiments, the bare lanes of the pre-strained multilane electrode have creasing of, of about, of at most, or of at most about, 4.5 mm, 4.0 mm, 3.5 mm, 3.0 mm, 2.5 mm, 2.0 mm, 1.5 mm, 1.0 mm, 0.5 mm, 0 mm or any range of values therebetween.

In some embodiments, forces can be applied to one side of each bare lane rather than having forces applied to both the first and second sides of the bare lanes. In some embodiments, the forces can be applied to a first side of each bare lane, and forces in the opposite direction can be applied to the coated lanes.

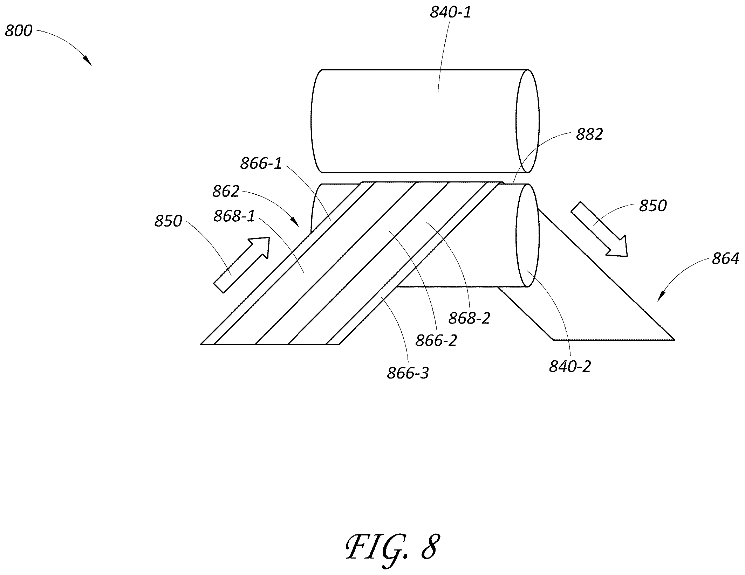

FIG. 8 is a perspective illustration of a calender system 800. The calender system 800 includes a first calender roller 840-1 and a second calender roller 840-2. The first calender roller 840-1 and second calender roller 840-2 form a nib 882. The calender rollers 840-1 and 840-2 rotate and pull a pre-strained multilane electrode 862 in a direction 850 through the nib 882.

The pre-strained multilane electrode 862 includes a plurality of bare lanes 866-1, 866-2, and 866-3 and a plurality of coated lanes 868-1 and 868-2. The bare lanes 866-1, 866-2, and 866-3 are pre-strained and shorter than the plurality of coated lanes 868-1 and 868-2. The calender rollers 840-1 and 840-2 contact the thicker coated lanes 868-1 and 868-2 thereby apply a force to the coated lanes 868-1 and 868-2, thereby forming a calendered multilane electrode 864.

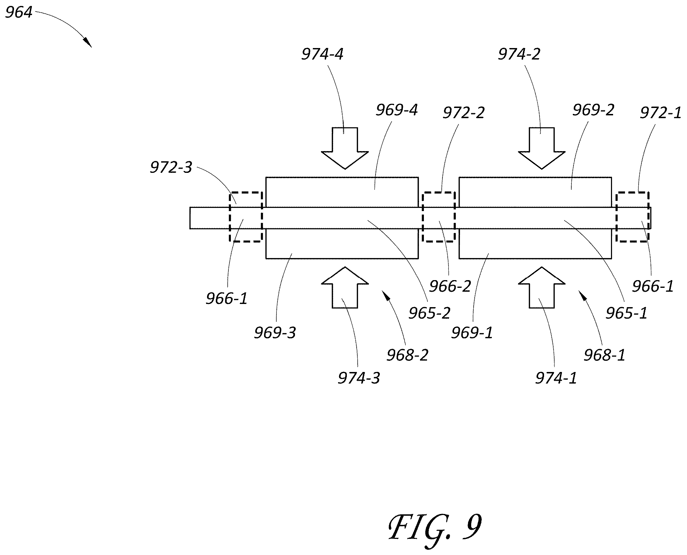

FIG. 9 is a cross-section view of a calendered electrode 964 illustrating the forces applied by a pair of calender rollers after a pre-straining process. As illustrated, the calendered electrode 964 includes a first bare lane 966-1 positioned next to a first coated lane 968-1. The first coated lane 968-1 includes a coated foil portion 965-1 with a first electrode film coated portion 969-1 positioned on a first side and another second electrode film coated portion 969-2 positioned on a second side of the coated foil portion 965-1. A second bare lane 966-2 is positioned on the other side of the first coated lane 968-1 and a third bare lane 966-3 is positioned on the other side of the second bare lane 966-2. A first force 972-1 is applied to a first side of the first coated lane 968-1 and a second force 972-2 is applied to a second side of the first coated lane 968-1. The first force 972-1 and the second force 972-2 are applied in opposing directions compressing the first coated lane 968-1. A third force 972-3 is applied to a first side of the second coated lane 968-2 and a fourth force 972-4 is applied to a second side of the second coated lane 968-2. The third force 972-3 and the fourth force 972-4 are applied in opposing directions compressing the second coated lane 968-2. The compression of the first coated lane 968-1 and the second coated lane 968-2 creates a strain in each of the bare lanes 966-1, 966-2, and 966-3. The strain created in each of the bare lane 966-1, 966-2, and 966-3 offsets the strain from the pre-strain process. The forces of the calender process can remove some, all, or substantially all of the camber and/or creasing in the pre-strained multilane electrode.

In some embodiments, the bare lanes of the calendered multilane electrode have a camber of, of about, of at most, or of at most about, 0.5 cm/m, 0.45 cm/m, 0.4 cm/m, 0.35 cm/m, 0.3 cm/m, 0.25 cm/m, 0.2 cm/m, 0.15 cm/m, 0.1 cm/m, 0.05 cm/m, or any range of values therebetween. In some embodiments, the bare lanes of the calendered multilane electrode have creasing of, of about, of at most, or of at most about,1.5 mm, 1.0 mm, 0.5 mm, 0 mm or any range of values therebetween.

In contrast, in some examples, the multilane electrode is calendered without first being pre-strained. In some embodiments, the calendered, non-prestrained electrode can have a camber of, of about, of at most, or of at most about, 0.8 cm/m, 0.75 cm/m, 0.7 cm/m, 0.65 cm/m, 0.6 cm/m, 0.5 cm/m, 0.45 cm/m, 0.4 cm/m, 0.35 cm/m, 0.3 cm/m, 0.25 cm/m, 0.2 cm/m, 0.15 cm/m, 0.1 cm/m, 0.05 cm/m, or any range of values therebetween. In some embodiments, the camber can run across all the bare lanes on the calendered, non-prestrained electrode. In some embodiments, the camber can run across substantially all the bare lanes on the calendered, non-prestrained electrode. In some embodiments, the camber can run across one or more of the bare lanes on the calendered, non-prestrained electrode. In some embodiments, the bare lanes of the calendered, non-prestrained electrode have creasing of, of about, of at most, or of at most about,5 mm, 4 mm, 3.5 mm, 3 mm, 2.5 mm, 2 mm, 1.5 mm or any range of values therebetween.

### Electrode Materials, Electrode Films, Electrodes and Energy Storage Devices

An active material (e.g., cathode active material, anode active material) may be used in the preparation of an electrode film and/or electrode for an energy storage device. In some embodiments, an electrode comprises a current collector (i.e., a foil layer) and an electrode film (i.e., coated lane).

In some embodiments, the active material is a cathode active material. In some embodiments, the cathode active material is selected from at least one of a metal oxide, metal sulfide, a sulfur-carbon composite, a lithium metal oxide, and a material including sulfur. In some embodiments, the cathode active material is selected from lithium iron phosphate (i.e., LiFePO₄ or "LFP"), lithium manganese iron phosphate (e.g., LiMn_{0.6}Fe_{0.4}PO₄ or "LMFP"), lithium nickel manganese cobalt oxide (i.e., LiNiₓMn_{y}Co_{1-x-y}O₂ or "NMC"), lithium nickel cobalt aluminum oxide (i.e., LiNiₓCo_{y}Al_{z}O₂ or "NCA"), lithium manganese oxide ("LMO"), lithium nickel manganese oxide ("LNMO"), lithium cobalt oxide ("LCO"), lithium titanate ("LTO"), or combinations thereof. In some embodiments, the cathode active material includes at least two of LFP, LMFP, NMC, NCA, LMO, LNMO, LCO, LTO, and combinations thereof. In some embodiments, the cathode active material is an iron phosphate-based active material. In some embodiments, iron phosphate-based active materials include LiFePO₄ (i.e., "lithium iron phosphate" and "LFP") and LiMn₁₋ₓFeₓPO₄ (i.e., "lithium manganese iron phosphate" and "LMFP") (e.g., LiMn_{0.6}Fe_{0.4}PO₄ or LiMn_{0.8}Fe_{0.2}PO₄). In some embodiments, the iron phosphate-based active material includes LFP. In some embodiments, the iron phosphate-based active material includes an LMFP. In some embodiments, the iron phosphate-based active material includes an LFP and/or an LMFP.

In some embodiments, the active material is an anode active material. In some embodiments, anode active materials can include, for example, an insertion material (such as carbon, graphite, and/or graphene), an alloying/dealloying material (such as silicon, silicon oxide, tin, and/or tin oxide), a metal alloy or compound (such as Si-Al, and/or Si-Sn), and/or a conversion material (such as manganese oxide, molybdenum oxide, nickel oxide, and/or copper oxide). The anode active materials can be used alone or mixed together to form multi-phase materials (such as Si-C, Sn-C, SiOx-C, SnOx-C, Si-Sn, Si-SiOx, Sn-SnOx, Si-SiOx-C, Sn-SnOx-C, Si-Sn-C, SiOx-SnOx-C, Si-SiOx-Sn, or Sn-SiOx-SnOx.). Anode active materials include common natural graphite, synthetic or artificial graphite, surface modified graphite, spherical-shaped graphite, flake-shaped graphite and blends or combinations of these types of graphite, metallic elements and its compound as well as metal-C composite for anode.

In some embodiments, the electrode film comprises the active material in an amount of, of about, of at least, or at least about, 70 wt.%, 75 wt.%, 80 wt.%, 85 wt.%, 86 wt.%, 87 wt.%, 88 wt.%, 89 wt.%, 90 wt.%, 91 wt.%, 92 wt.%, 93 wt.%, 94 wt.%, 95 wt.%, 96 wt.%, 97 wt.%, 98 wt.%, 98.5 wt.%, 99 wt.%, 99.5 wt.%, 99.8 wt.% or 99.9 wt.%, or any range of values therebetween.

In some embodiments, an electrode film comprises a carbon material configured to reversibly intercalate lithium ions. In some embodiments, the lithium intercalating carbon is selected from a graphitic carbon, graphite, hard carbon, soft carbon and combinations thereof. For example, the electrode film of the electrode can include a binder material, one or more of graphitic carbon, graphite, graphene-containing carbon, hard carbon and soft carbon, and an electrical conductivity promoting material. In some embodiments, an electrode is mixed with lithium metal and/or lithium ions. In some embodiments, the electrode comprises the carbon material in a total amount of, of about, of at most, or at most about, 20 wt.%, 15 wt.%, 10 wt.%, 9 wt.%, 8 wt.%, 7 wt.%, 6 wt.%, 5 wt.%, 4 wt.%, 3 wt.%, 2 wt.%, 1 wt.%, or any range of values therebetween.

In some embodiments, an electrode film includes a conductive additive. In some embodiments, the conductive additive may comprise a conductive carbon additive, such as a carbon black. In some embodiments, the conductive additive may comprise a conductive carbon additive. In some embodiments, the conductive carbon additive comprises carbon black, carbon nanotubes, such as single-walled carbon nanotubes (SWCNTs) and multi-walled carbon nanotubes (MWCNTs). In some embodiments, the electrode film comprises the conductive additive in a total amount of, of about, of at most, or at most about, 10 wt.%, 9 wt.%, 8 wt.%, 7 wt.%, 6 wt.%, 5 wt.%, 4 wt.%, 3 wt.%, 2 wt.%, 1 wt.%, 0.5 wt.%, 0.25 wt.%, 0.1 wt.%, or any range of values therebetween. In some embodiments, each of the conductive additive is in an amount of, of about, of at most, or at most about, 10 wt.%, 9 wt.%, 8 wt.%, 7 wt.%, 6 wt.%, 5 wt.%, 4 wt.%, 3 wt.%, 2 wt.%, 1 wt.%, 0.5 wt.%, 0.25 wt.%, 0.1 wt.%, of the electrode film, or any range of values therebetween. In some embodiments, the conductive additive is carbon black.

In some embodiments, the electrode film includes a binder. In some embodiments, binders can include polytetrafluoroethylene (PTFE), a polyolefin, polyalkylenes, polyethers, styrene-butadiene, co-polymers of polysiloxanes and polysiloxane, branched polyethers, polyvinylethers, a carboxymethylcellulose (CMC), co-polymers thereof, and/or combinations thereof. In some embodiments, the polyolefin can include polyethylene (PE), polypropylene (PP), polyvinylidene fluoride (PVDF), co-polymers thereof, and/or combinations thereof. For example, the binder can include polyvinylene chloride, poly(phenylene oxide) (PPO), polyethylene-block-poly(ethylene glycol), poly(ethylene oxide) (PEO), poly(phenylene oxide) (PPO), polyethylene-block-poly(ethylene glycol), polydimethylsiloxane (PDMS), polydimethylsiloxane-coalkylmethylsiloxane, co-polymers thereof, and/or combinations thereof. In some embodiments, the binder may include a thermoplastic. In some embodiments, the binder comprises a fibrillizable and/or fibrillized polymer. In certain embodiments, the binder comprises, consists essentially, or consists of a single fibrillizable and/or fibrillized binder, such as PTFE. In some embodiments, the electrode film includes, includes about, includes at most, or includes at most about, 1 wt.%, 2 wt.%, 3 wt.%, 4 wt.%, 5 wt.%, 6 wt.%, 7 wt.%, 8 wt.%, 9 wt.%, 10 wt.%, or any range of values therebetween, of a binder.

In some embodiments, the electrode film can be a wet processed electrode film. In some embodiments, the electrode film is prepared by a wet or slurry-based electrode fabrication process. In some embodiments, the electrode film of the present disclosure can be a dry processed electrode film. In some embodiments, the electrode film is prepared by a dry electrode fabrication process. As used herein, a dry electrode fabrication process can refer to a process in which no or substantially no solvents are used to form a dry electrode film. For example, components of the active layer or electrode film, including carbon materials and binders, may comprise, consist of, or consist essentially of dry particles. The dry particles for forming the active layer or electrode film may be combined to provide a dry particle active layer mixture. In some embodiments, the active layer or electrode film may be formed from the dry particle active layer mixture such that weight percentages of the components of the active layer or electrode film and weight percentages of the components of the dry particles active layer mixture are substantially the same. In some embodiments, the active layer or electrode film formed from the dry particle active layer mixture using the dry fabrication process may be free from, or substantially free from, any processing additives such as solvents and solvent residues resulting therefrom. In some embodiments, the resulting active layer or electrode films are self-supporting films formed using the dry process from the dry particle mixture. In some embodiments, the resulting active layer or electrode films are free-standing films formed using the dry process from the dry particle mixture. A process for forming an active layer or electrode film can include fibrillizing the fibrillizable binder component(s) such that the film comprises fibrillized binder. In further embodiments, a free-standing active layer or electrode film may be formed in the absence of a current collector. In still further embodiments, an active layer or electrode film may comprise a fibrillized polymer matrix such that the film is self-supporting. It is thought that a matrix, lattice, or web of fibrils can be formed to provide mechanical structure to the electrode film.

In some embodiments, an electrode film is disposed on a current collector (e.g., a coated lane is disposed on a foil layer) to form an electrode. In some embodiments, a current collector can include a metallic material, such as a material comprising aluminum, nickel, copper, combinations of the foregoing. In some embodiments, a current collector comprises a pure metal. In some embodiments, a current collector comprises a metallized polymer film or metal coated polymer film. In some embodiments, the polymer comprises polyethylene terephthalate (PET), biaxially oriented polypropylene (BOPP) or a combination thereof. In some embodiments, the metal coating comprises aluminum. In some embodiments, coating the final electrode film mixture comprises forming a uniform electrode film mixture coating. In some embodiments, the current collector comprises a thickness of, of about, of at most, or at most about, 200 µm, 100 µm, 50 µm, 40 µm, 30 µm, 20 µm, 15 µm, 10 µm, 5 µm, or any range of values therebetween.

In some embodiments, an electrode is a double-sided electrode. In some embodiments, the double-sided electrode includes two electrode films. In some embodiments, the double-sided electrode may include a current collector, a top electrode film, and a bottom electrode film. In some embodiments, each of the two electrode films can have any suitable shape, size and thickness.

In some embodiments, an energy storage device comprises a separator, an anode electrode, the cathode electrode, an electrolyte, and a housing, wherein the electrolyte, separator, anode electrode and cathode electrode are disposed within the housing and the separator is positioned between the anode and cathode electrodes. In some embodiments, an energy storage device is formed by placing an electrolyte, a separator, an anode electrode and the cathode electrode described herein within a housing, wherein the separator is placed between the anode electrode and the cathode electrode.

An electrode assembly includes a cathode, an anode, and a separator positioned between the anode and cathode. In some embodiments, the electrode assembly is a wound electrode (i.e., rolled electrode) assembly (e.g., a jelly roll). In some embodiments, the energy storage device is selected from the group consisting of a cylindrical energy storage device, a stacked prismatic energy storage device, and a spiral-wound prismatic energy storage device.

The electrode disclosed herein may be used for an energy storage device. In some embodiments, the energy storage device comprises a separator, an anode electrode, the cathode electrode, an electrolyte, and a housing, wherein the electrolyte, separator, anode electrode and cathode electrode are disposed within the housing and the separator is positioned between the anode and cathode electrodes. In some embodiments, an energy storage device is formed by placing an electrolyte, a separator, an anode electrode and the cathode electrode described herein within a housing, wherein the separator is placed between the anode electrode and the cathode electrode. In some embodiments, the energy storage device comprises an anode electrode positioned between two cathode electrodes. In some embodiments, the anode electrode and/or the cathode electrode comprises a shaped electrode film. In some embodiments, the energy storage device is a lithium-ion battery. In some embodiments, the energy storage devices may be a battery, capacitor, capacitor-battery hybrid, fuel cell, or combinations thereof. In some embodiments, the energy storage system or energy storage device may be used for electromobility. In some embodiments, the energy storage device may be used in motor vehicles, including hybrid electric vehicles (HEV), plug-in hybrid electric vehicles (PHEV), and/or electric vehicles (EV). In some embodiments, the energy storage device used in motor vehicles, including hybrid electric vehicles (HEV), plug-in hybrid electric vehicles (PHEV), and/or electric vehicles (EV) reduces greenhouse gas emissions.

In some embodiments, the energy storage device is charged with a suitable lithium-containing electrolyte. For example, the energy storage device can include a lithium salt, and a solvent, such as a non-aqueous or organic solvent. Generally, the lithium salt includes an anion that is redox stable. In some embodiments, the anion can be monovalent. In some embodiments, a lithium salt can be selected from lithium hexafluorophosphate (LiPF₆), lithium bis(trifluoromethanesulfonyl)imide (LiFSI), lithium tetrafluoroborate (LiBF₄), lithium perchlorate (LiClO₄), lithium bis(trifluoromethansulfonyl)imide (LiN(SO₂CF₃)₂), lithium trifluoromethansulfonate (LiSO₃CF₃), lithium bis(oxalato)borate (LiB(C₂O₄)₂), lithium bis(fluorosulfonyl)imide (LiN(SO₂F)₂, lithium difluoro(oxalato)borate (LiC₂BF₂O₄) and combinations thereof. In some embodiments, the electrolyte can include a quaternary ammonium cation and an anion selected from the group consisting of hexafluorophosphate, tetrafluoroborate and iodide. In some embodiments, the salt concentration can be about 0.1 mol/L (M) to about 5 M, about 0.2 M to about 3 M, or about 0.3 M to about 2 M. In further embodiments, the salt concentration of the electrolyte can be about 0.7 M to about 2 M. In certain embodiments, the salt concentration of the electrolyte can be about 0.2 M, about 0.3 M, about 0.4 M, about 0.5 M, about 0.6 M, about 0.7 M, about 0.8 M. about 0.9 M, about 1 M, about 1.1 M, about 1.2 M, 1.3M, 1.4M, 1.5M or values therebetween.

In some embodiments, an energy storage device can include a liquid solvent. The solvent need not dissolve every component, and need not completely dissolve any component, of the electrolyte. In further embodiments, the solvent can be an organic solvent. In some embodiments, a solvent can include one or more functional groups selected from dioxathiolane (e.g., 1,3,2-dioxathiolane-2,2-dioxide (i.e., "DTD")), carbonates, ethers and/or esters. In some embodiments, the solvent can comprise a carbonate. In further embodiments, the carbonate can be selected from cyclic carbonates such as, for example, ethylene carbonate (EC), propylene carbonate (PC), vinyl ethylene carbonate (VEC), vinylene carbonate (VC), fluoroethylene carbonate (FEC), and combinations thereof, or acyclic carbonates such as, for example, dimethyl carbonate (DMC), diethyl carbonate (DEC), ethyl methyl carbonate (EMC), 1,3-propene sultone (PRS), and combinations thereof. In some embodiments, the solvent can comprise an ester. In some embodiments, the ester is selected from methyl acetate (MA), methyl propionate (MP), ethyl acetate (EA), methyl butyrate (MB), and combinations thereof. In some embodiments, the solvent may include EC, PC, VEC, VC, FEC, DMC, DEC, EMC, MA, MP, EA, MB, and combinations thereof. In some embodiments, the solvent may include EC, DMC, DEC, EMC, MA, and combinations thereof. In some embodiments, the solvent may include EC, DMC, EMC, and combinations thereof. In some embodiments, the solvent may include a ratio of EC:DMC:EMC of 10-30:0-90:0-70.

In some embodiments, one or more solvents can be used at a concentration of, of about, of at least, or at least about, 30 wt. %, 35 wt. %, 40 wt. %, 45 wt. %, 50 wt. %, 55 wt. %, 60 wt. %, 65 wt. %, 70 wt. %, 75 wt. %, 80 wt. %, 85 wt. % or 90 wt. %, or any range of values therebetween. In some embodiments, solvents are utilized as additives in the electrolyte system, and can be used at a concentration of, of about, of at most, or at most about, 0.1 wt. %, 0.2 wt. %, 0.3 wt. %, 0.4 wt. %, 0.5 wt. %, 0.6 wt. %, 0.7 wt. %, 0.8 wt. %, 0.9 wt. %, 1 wt. %, 1.1 wt. %, 1.2 wt. %, 1.3 wt. %, 1.4 wt. %, 1.5 wt. %, 1.6 wt. %, 1.7 wt. %, 1.8 wt. %, 1.9 wt. %, 2 wt. %, 2.1 wt. %, 2.2 wt. %, 2.3 wt. %, 2.4 wt. %, 2.5 wt. %, 2.6 wt. %, 2.7 wt. %, 2.8 wt. %, 2.9 wt. %, 3 wt. %, 4 wt. %, 5 wt. %, 6 wt. %, 7 wt. %, 8 wt. %, 9 wt. % or 10 wt. %, or any range of values therebetween. For example, in some embodiments, the amount of an additive in the electrolyte is or is about in any one of the following ranges: 0.1-10 wt.%, 1-6 wt.%, 2-5 wt.%, 0.1-6 wt.%, 2-8 wt.%, 2-3 wt.%, or 1-4 wt.%.

In some embodiments, an energy storage device is created such that one electrode (e.g., anode) is larger than and overhangs the other electrode (e.g., cathode). One electrode may overhang the other in the winding direction and/or non-winding direction of the electrode assembly. Such electrode overhangs may avoid yield losses. In some embodiments where there is no, or is substantially no, overlap and/or intermingling of the separator and the shaped electrode film (e.g., cathode electrode film), the boundary of the shaped electrode film is easier to identify and therefore improves the ability to form a counter electrode (e.g., anode electrode) with an overhang.

### EXAMPLES

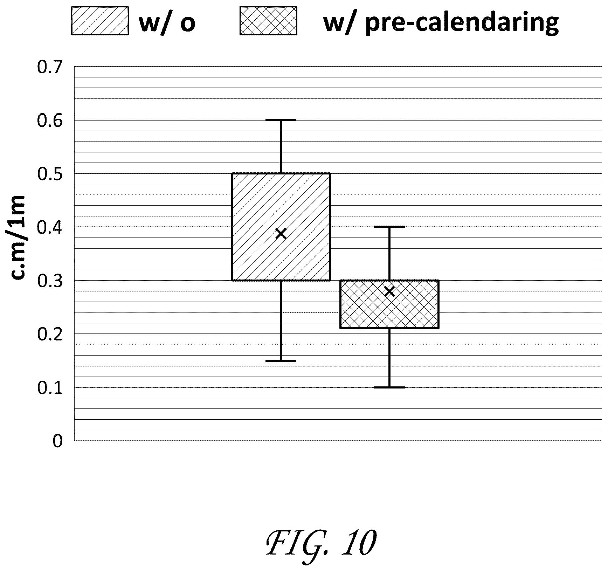

FIG. 10 illustrates the camber in a calendered multilane electrode without a pre-calendering process and with a pre-calendering process. As illustrated, pre-calendering the bare lanes of a multilane electrode prior to calendering the multilane electrode can reduce the camber in the calendered multilane electrode when compared to a multilane electrode that is not pre-calendered.

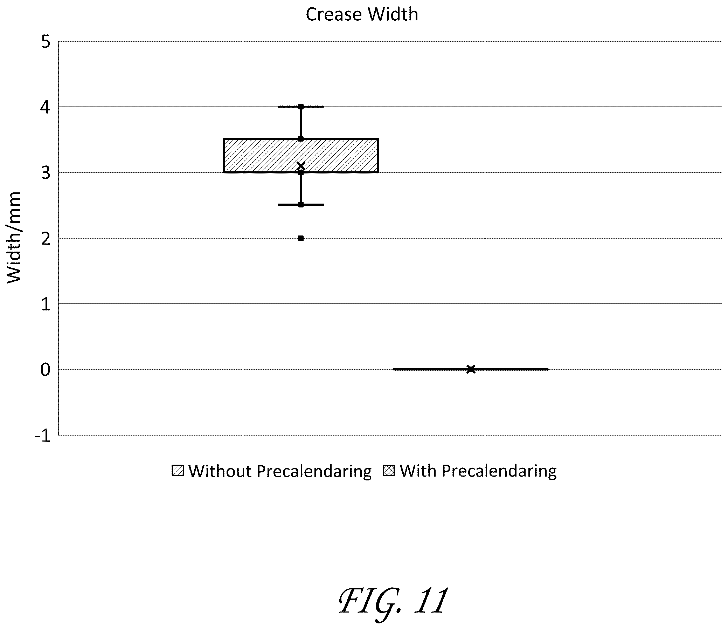

FIG. 11 illustrates the creasing in a calendered multilane electrode without a pre-calendering process and with a pre-calendering process. As illustrated, pre-calendering the bare lanes of a multilane electrode prior to calendering the multilane electrode can reduce the creasing in the calendered multilane electrode when compared to a multilane electrode that is not pre-calendered.

The foregoing disclosure is not intended to limit the present disclosure to the precise forms or embodiments disclosed herein. As such, it is contemplated that various alternative forms, embodiments and/or modifications to the present disclosure, whether explicitly described or implied herein, are possible in light of the disclosure. Having thus described embodiments of the present disclosure, a person of ordinary skill in the art will recognize that changes may be made in form and detail without departing from the scope of the present disclosure.

In the foregoing specification, the disclosure has been described with reference to specific embodiments. However, as one skilled in the art will appreciate, various embodiments disclosed herein can be modified or otherwise implemented in various other ways without departing from the spirit and scope of the disclosure. Accordingly, this description is to be considered as illustrative and is for the purpose of teaching those skilled in the art the manner of making and using various embodiments of the disclosed battery system. It is to be understood that the forms of disclosure herein shown and described are to be taken as representative embodiments. Equivalent elements, or materials may be substituted for those representatively illustrated and described herein. Moreover, certain features of the disclosure may be utilized independently of the use of other features, all of which is apparent to one skilled in the art after having the benefit of this description of the disclosure. Expressions such as "including", "comprising", "incorporating", "consisting of, "have", "is" used to describe and claim the present disclosure are intended to be construed in a non-exclusive manner, namely allowing for items, components or elements not explicitly described also to be present. Reference to the singular is also to be construed to relate to the plural.

Further, various embodiments disclosed herein are to be taken in the illustrative and explanatory sense and should in no way be construed as limiting of the present disclosure. All joinder references (e.g., connected, associated, coupled, and the like) are only used to aid the reader's understanding of the present disclosure, and may not create limitations, particularly as to the position, orientation, or use of the elements disclosed herein. Therefore, joinder references, if any, are to be construed broadly. Moreover, such joinder references may not necessarily infer that two elements are directly connected to each other.

Additionally, all numerical terms, such as, but not limited to, "first", "second", "one", "another", or any other ordinary and/or numerical terms, should also be taken only as identifiers, to assist the reader's understanding of the various elements, embodiments, variations and/ or modifications of the present disclosure, and may not create any limitations, particularly as to the order, or preference, of any element, embodiment, variation and/or modification relative to, or over, another element, embodiment, variation and/or modification.

It will also be appreciated that one or more of the elements depicted in the drawings/figures can also be implemented in a more separated or integrated manner, or even removed in certain cases, as is useful in accordance with a particular application.

For expository purposes, the term "horizontal" as used herein is defined as a plane parallel to the plane or surface of the floor of the area in which the device being described is used or the method being described is performed, regardless of its orientation. The term "floor" can be interchanged with the term "ground." The term "vertical" refers to a direction perpendicular to the horizontal as just defined. Terms such as "above," "below," "bottom," "top," "side," "front," "rear," "lateral," "higher," "lower," "upper," "over," and "under," are defined with respect to the horizontal plane, in use.

The terms "comprising," "including," "having," and the like are synonymous and are used inclusively, in an open-ended fashion, and do not exclude additional elements, features, acts, operations, and so forth. Also, the term "or" is used in its inclusive sense (and not in its exclusive sense) so that when used, for example, to connect a list of elements, the term "or" means one, some, or all of the elements in the list.

Although certain embodiments and examples have been described herein, it will be understood by those skilled in the art that many aspects of the systems shown and described in the present disclosure may be differently combined and/or modified to form still further embodiments or acceptable examples. All such modifications and variations are intended to be included herein within the scope of this disclosure. A wide variety of designs and approaches are possible. No feature, structure, or step disclosed herein is essential or indispensable.

For purposes of this disclosure, certain aspects, advantages, and novel features are described herein. It is to be understood that not necessarily all such advantages may be achieved in accordance with any particular embodiment. Thus, for example, those skilled in the art will recognize that the disclosure may be embodied or carried out in a manner that achieves one advantage or a group of advantages as taught herein without necessarily achieving other advantages as may be taught or suggested herein.

Moreover, while illustrative embodiments have been described herein, the scope of any and all embodiments having equivalent elements, modifications, omissions, combinations (e.g., of aspects across various embodiments), adaptations and/or alterations as would be appreciated by those in the art based on the present disclosure. The limitations in the claims are to be interpreted broadly based on the language employed in the claims and not limited to the examples described in the present specification or during the prosecution of the application, which examples are to be construed as non-exclusive. Further, the actions of the disclosed processes and methods may be modified in any manner, including by reordering actions and/or inserting additional actions and/or deleting actions. It is intended, therefore, that the specification and examples be considered as illustrative only, with a true scope and spirit being indicated by the claims and their full scope of equivalents.

Conditional language used herein, such as, among others, "can," "might," "may," "e.g.," and the like, unless specifically stated otherwise, or otherwise understood within the context as used, is generally intended to convey that some embodiments include, while other embodiments do not include, certain features, elements, and/or states. Thus, such conditional language is not generally intended to imply that features, elements, blocks, and/or states are in any way required for one or more embodiments or that one or more embodiments necessarily include logic for deciding, with or without author input or prompting, whether these features, elements and/or states are included or are to be performed in any particular embodiment.

The ranges disclosed herein also encompass any and all overlap, sub-ranges, and combinations thereof. Language such as "up to," "at least," "greater than," "less than," "between," and the like includes the number recited.

## Claims

1. A system for calendering a multilane electrode, comprising:
a pre-strain roll device comprising a plurality of pre-strain rollers and a pressure roller, wherein the plurality of pre-strain rollers and the pressure roller form a pre-strain nib; and
a calender roll device comprising a pair of calendering rollers forming a calendering nib positioned downstream from the pre-strain roll device.

2. The system of Claim 1, further comprising a multilane electrode comprising a plurality of electrode films and a plurality of bare lanes positioned within the pre-strain nib and the calendering nib.

3. The system of Claim 1 or 2, further comprising a driving pressure roller contacting the pressure roller.

4. The system of any one of Claims 1-3, wherein the plurality of pre-strain rollers are configured to be driven by the pressure roller.

5. The system of any one of Claims 1-4, wherein the pressure roller is configured to press against the plurality of pre-strain rollers with a pressure of at least about 0.11 T/mm.

6. The system of Claim 1-5, wherein the calender roll device is configured to provide a pressure of at least about 0.25 T/mm.

7. The system of Claim 1-6, wherein each of the pair of pre-strain rollers comprises a cylindrical surface positioned tangential to a cylindrical surface of the pressure roller, preferably wherein each of the pair of pre-strain rollers comprises a chamfer at each end of the cylindrical surface.

8. The system of Claim 1-7, wherein the pair of pre-strain rollers are heated.

9. The system of Claim 1-8, wherein the plurality of pre-strain rollers comprise a stainless steel alloy material, and/or wherein each of the pair of pre-strain rollers comprise a surface coating.

10. A method of manufacturing a multilane electrode for an energy storage device, comprising:
pre-strain calendering a multilane electrode comprising a plurality of bare lanes and a plurality of electrode films, wherein pre-strain calendering the multilane electrode comprises straining the plurality of bare lanes to form a pre-strained multilane electrode; and
calendering the pre-strained multilane electrode to form a strain-balanced multilane electrode.

11. The method of Claim 10, wherein the multilane electrode further comprises a plurality of ceramic coated portions each positioned between each of the plurality of electrode films and each of the plurality of bare lanes, and/or wherein calendering the pre-strained multilane electrode occurs from a first end to a second end of the pre-strained multilane electrode.

12. The method of claim 10 or 11, wherein the strain-balanced multilane electrode comprises a camber of at most about 0.4 cm/m.

13. The method of any one of claims 10-12, further comprising forming the multilane electrode, preferably wherein the multilane electrode is formed via a wet process and/or wherein the multilane electrode is formed via a dry process.

14. A method of forming a plurality of electrodes, comprising:
performing the method of any one of claims 10-13; and
cutting along a length of each bare lanes to form a plurality of electrodes.

15. A method of forming an electrode assembly, comprising:
the method of Claim 14; and
disposing a separator between one of the plurality of electrodes and another electrode to form an electrode assembly;
preferably wherein the one of the plurality of electrodes is a cathode.
